# EUROPÄISCHE PATENTSCHRIFT

(11) **EP 2 757 273 B1**
(45) Veröffentlichungstag und Bekanntmachung des Hinweises auf die Patenterteilung: **26.06.2019**
(21) Anmeldenummer: 14151494.3
(22) Anmeldetag: 16.01.2014
(51) Int. Cl.: F16B 13/02, B26F 1/36, F16B 13/12, E04F 21/18

(54) **Integraler Spenglerschraubendübel und zugehörige Handlochstanze mit Stanzabstandseinstellfunktion**
Integral metal screw dowel and associated hand punch with punch distance adjustment function
Cheville à vis étanche intégrale et poinçon manuel associé avec fonction de réglage de la distance de poinçonnage

(30) Priorität: 17.01.2013 DE 102013200682
(43) Veröffentlichungstag der Anmeldung: 23.07.2014
(73) Patentinhaber: Adolf Würth GmbH & Co. KG, 74653 Künzelsau (DE); Würth International AG, 7000 Chur (CH)
(72) Erfinder: Schweigl, Christoph, 6423 Mötz (AT); Kuprian, Wolfgang, 6433 Ötz (AT)
(74) Vertreter: Dilg, Haeusler, Schindelmann Patentanwaltsgesellschaft mbH

(56) Entgegenhaltungen:
- EP-A2- 1 818 477
- WO-A1-85/01544
- WO-A1-2014/090707
- DE-A1-102004 062 151
- DE-A1-102008 010 606
- US-A1- 2005 055 927

## Beschreibung

Die Erfindung betrifft ein Verfahren zum Befestigen einer Platte an einem weichen Untergrund.

Herkömmliche Lochstanzen sind in DE 102 42 710 und DE 75 11 724 offenbart.

Herkömmliche Befestigungselemente sind in DE 28 01 962, DE 10 2008 010 606, DE 295 09 487, DE 29 812 947, DE 20 2004 015 509, DE 692 00 308, DE 60 2004 005 630 und EP 1 908 965 offenbart. In der DE 295 09 487 U1 wird ein Befestigungsgegenstand an einer Gipskartonplatte befestigt unter Verwendung eines mehrere, unterschiedliche Gewindeabschnitte aufweisenden Einsatzkörpers.

Im Rahmen von Spenglerarbeiten und dergleichen kommt es vor, dass eine Platte, wie zum Beispiel ein dünnes Metallblech, an einer Dämmstoffplatte oder einem anderen weichen Untergrund befestigt werden muss, der auf einer Wand, Decke oder dergleichen (zum Beispiel aus Stein oder Holz) befestigt ist. Herkömmlich wird hierfür mit einem Bohrer ein Loch durch das Metallblech und ggf. durch oder in die Dämmstoffplatte gebohrt. Nachfolgend wird die Platte entfernt und ein aus Kunststoff gefertigter Dübelkörper in das vorgebohrte Loch in der Dämmstoffplatte eingebracht und die Platte wieder auf die Dämmstoffplatte aufgelegt. Danach wird in einem separaten Montageschritt eine Dichtschraube in einen Aufnahmehohlraum des Dübelkörpers eingedreht. Bei diesem Eindrehen kommt es zu einem Aufspreizen des Dübelkörpers in der Dämmstoffplatte und somit zu einer Befestigung der Metallplatte an der Dämmstoffplatte mittels des zweiteiligen Befestigungssystems aus Dübelkörper und Dichtschraube. Bei anderen Dübelsystemen erfolgt eine Befestigung durch die Gewindeform.

Allerdings ist ein solches herkömmliches Verfahren aus mehreren Gründen nachteilig bzw. aufwendig. Zum einen ist es schwierig, ein kreisrundes Loch in ein Metallblech zu bohren, da dies ein ideal senkrechtes Aufsetzen des Bohrers auf dem Metallblech und Haften desselben während des Bohrvorgangs erfordern würde. Die Problematik mit einem unrunden Bohrloch liegt nicht nur an der Handführung, sondern auch an der Bohrergeometrie. Somit kommt es häufig zu einem unvollständigen Ausfüllen des Bohrlochs mit dem Befestigungssystem, so dass Hohlräume verbleiben können, was zu schlechten Befestigungseigenschaften führen kann. Zum anderen ist das Montageverfahren aufwendig und häufig nur durch das Zusammenspiel von zwei Monteuren möglich, da viele Teile zu handhaben und einzeln anzubringen sind.

Es ist eine Aufgabe der vorliegenden Erfindung, eine Platte an einem weichen Untergrund einfach und mit hoher Genauigkeit zu befestigen.

Diese Aufgabe wird durch den Gegenstand mit den Merkmalen gemäß dem unabhängigen Patentanspruch 1 gelöst. Weitere Ausführungsbeispiele sind in den abhängigen Ansprüchen gezeigt.

Gemäß einem Ausführungsbeispiel der vorliegenden Erfindung ist ein Verfahren zum Befestigen einer Platte an einem weichen (oder nachgiebigen oder porösen) Untergrund (zum Beispiel Styropor) mit einer Deckverputzschicht (zum Beispiel eine gegenüber dem Untergrund härtere Verputzschicht, insbesondere aus Kunstharz) geschaffen, wobei bei dem Verfahren ein einstückig vorgefertigtes (und daher einstückig zu handhabendes) Befestigungselement bereitgestellt wird, das einen Dübelkörper mit einem (insbesondere in dem weichen Untergrund gewindeschneidenden) ersten Außengewinde zum Eindrehen in den weichen Untergrund, einen Kopf mit einem Antrieb (zum Beispiel ein Längsschlitz, ein Kreuzschlitz, ein Sechskant oder eine andere Nut oder einen anderen Überstand an/in einer Stirnfläche des Kopfs) an einem ersten Ende des Dübelkörpers zum drehenden Antreiben des Befestigungselements mittels eines Drehwerkzeugs, und eine Vorschubspitze mit einer ersten Härte größer als eine zweite Härte der Deckverputzschicht an einem dem ersten Ende gegenüberliegenden zweiten Ende des Dübelkörpers aufweist, wobei die Vorschubspitze zum Eindrehen in die Deckverputzschicht ausgebildet ist. Bei dem Verfahren wird ferner mindestens ein Loch in die Platte mittels einer Lochstanze gestanzt (d.h. anschaulich umfänglich ausgeschnitten, zum Beispiel mittels eines Dorns und einer zugehörigen Matrize), wird das Drehwerkzeug an den Kopf angesetzt und wird der Antrieb zum Einbringen des bereits vor dem Einbringen einstückig vorgefertigten Befestigungselements durch das Loch in der Platte in den weichen Untergrund drehend angetrieben, so dass (insbesondere ohne Vorbohrung von weichem Untergrund und Deckverputzschicht) zunächst die Vorschubspitze in die Deckverputzschicht und nachfolgend der Dübelkörper in den weichen Untergrund eingedreht wird.

Ferner wird eine Anordnung offenbart, die eine, insbesondere lochfreie, Platte, insbesondere ein Feinblech, in die mindestens ein Loch zu stanzen ist, einen weichen Untergrund mit einer Deckverputzschicht, an dem die Platte zu befestigen ist, eine Lochstanze zum Stanzen von mindestens einem Loch in der Platte, und mindestens ein einstückig vorgefertigtes Befestigungselement aufweist. Das Befestigungselement weist einen Dübelkörper mit einem ersten Außengewinde zum Eindrehen in den weichen Untergrund, einen Kopf mit einem Antrieb an einem ersten Ende des Dübelkörpers zum drehenden Antreiben des Befestigungselements mittels eines Drehwerkzeugs, und eine Vorschubspitze mit einer ersten Härte größer als eine zweite Härte der Deckverputzschicht an einem dem ersten Ende gegenüberliegenden zweiten Ende des Dübelkörpers auf, wobei die Vorschubspitze zum Eindrehen in die Deckverputzschicht ausgebildet ist. Das mindestens eine Befestigungselement ist nach Stanzen mindestens eines Lochs in der Platte durch das mindestens eine Loch in der Platte in den weichen Untergrund einbringbar, indem zunächst die Vorschubspitze in die Deckverputzschicht und nachfolgend der Dübelkörper in den weichen Untergrund eingedreht wird.

Darüber hinaus wird eine Lochstanze (insbesondere eine Blechteil-Handlochstanze) zum Stanzen eines Lochs in einer Platte in einem einstellbaren Abstand von einer Referenzposition offenbart , wobei die Lochstanze eine Plattenaufnahme zum Aufnehmen eines Abschnitts der Platte, in der das Loch zu stanzen ist, einen Stanzaktuator, der von einem Benutzer betätigbar ist, um bei von der Plattenaufnahme aufgenommener Platte das Loch zu stanzen, eine Stanzeinrichtung, die eingerichtet ist, bei Betätigung des Stanzaktuators das Loch in dem von der Plattenaufnahme aufgenommenen Abschnitt der Platte zu stanzen, und eine Abstandseinstelleinrichtung aufweist, die eingerichtet ist, eine Stanzposition zu definieren (bzw. den Stanzaktuator an einer Soll-Stanzposition in eine stanzbereite Stellung zu bringen), in der das Loch in dem benutzerseitig einstellbaren Abstand von der Referenzposition (zum Beispiel die Position eines zuvor gestanzten Lochs in der Platte oder eine andere Bezugsposition wie zum Beispiel ein Plattenrand) zu stanzen ist.

Darüber hinaus wird ein einstückig vorgefertigtes Befestigungselement (d.h. ein einziges, zu handhabendes Stück) zum Befestigen einer mit einem Loch versehenen Platte an einem weichen Untergrund mit einer Deckverputzschicht offenbart , wobei das Befestigungselement einen Dübelkörper mit einem ersten Außengewinde zum Eindrehen in den weichen Untergrund, einen Kopf mit einem Antrieb an einem ersten Ende des Dübelkörpers zum drehenden Antreiben des Befestigungselements mittels eines Drehwerkzeugs, und eine Vorschubspitze mit einer ersten Härte größer als eine zweite Härte der Deckverputzschicht an einem dem ersten Ende gegenüberliegenden zweiten Ende des Dübelkörpers aufweist, wobei die Vorschubspitze zum Eindrehen in die Deckverputzschicht ausgebildet ist, wobei der Dübelkörper eine dritte Härte hat, die geringer als die erste Härte ist.

Ferner wird ein Kit zum Befestigen einer mit einem Loch versehenen Platte an einem weichen Untergrund offenbart. Das Kit weist eine Lochstanze mit den oben beschriebenen Merkmalen zum Stanzen eines Lochs in der Platte in einem einstellbaren Abstand von einer Referenzposition und mindestens ein einstückig vorgefertigtes Befestigungselement (insbesondere eine Mehrzahl von solchen Befestigungselementen) mit den oben beschriebenen Merkmalen zum Befestigen der mit dem Loch versehenen Platte an dem weichen Untergrund auf.

Darüber hinaus wird offenbart, dass eine Lochstanze mit den oben beschriebenen Merkmalen zum Stanzen eines Lochs in einer Platte und ein Befestigungselement mit den oben beschriebenen Merkmalen zum Befestigen der Platte an dem weichen Untergrund mit der Deckverputzschicht mittels Eindrehens des Befestigungselements durch das gestanzte Loch, durch die Deckverputzschicht und hinein in den weichen Untergrund verwendet werden kann.

Unter dem Begriff "Härte" wird im Rahmen dieser Anmeldung insbesondere der mechanische Widerstand verstanden, den ein Werkstoff der mechanischen Eindringung eines anderen Körpers entgegensetzt. Ein Körper aus einem härteren Material dringt daher in einen Körper aus einem weniger harten Material ein, wenn die beiden Körper mit Kraft gegeneinander gedrückt, gepresst oder sonst wie gegeneinander gerichtet werden. Die Materialeigenschaften der Deckverputzschicht können derart sein, dass deren Prismendruckfestigkeit in einem Bereich zwischen 0,5 N/mm² und 7 N/mm² liegt. Die Materialeigenschaften der Deckverputzschicht können derart sein, dass deren Elastizitätsmodul in einem Bereich zwischen 1000 N/mm² und 7000 N/mm² liegen. Die Materialeigenschaften der Vorschubspitze können derart sein, dass die Vorschubspitze bei Andrücken gegen und Eindrehen in die Deckverputzschicht mit den genannten Eigenschaften die Deckverputzschicht durchdringt.

Exemplarische Ausführungsbeispiele der Erfindung beruhen auf dem Zusammenspiel mehrerer Maßnahmen.

Gemäß einem ersten Aspekt ist es vorteilhaft, ein Loch in einer Platte, wie zum Beispiel einem Metallblech, mittels einer Handstanze zu stanzen anstatt zu bohren, da dadurch eine gewünschte Form des Lochs, insbesondere eine präzise kreisförmige Form, mit einfachen Mitteln hochpräzise hergestellt werden kann.

Gemäß einem zweiten Aspekt erlauben exemplarische Ausführungsbeispiele der Erfindung durch Einsatz einer speziellen Handstanze, mit der ein Abstand des zu stanzenden Lochs von einer Referenzposition (zum Beispiel einem anderen Loch) einfach und präzise vorgegeben werden kann, eine sehr genaue und doch leichte Befestigung einer Platte an einem weichen Untergrund mittels eines oder mehrerer Befestigungselemente.

Gemäß einem dritten Aspekt ist das einsetzbare Befestigungselement werkseitig einstückig vorgefertigt (zum Beispiel fest vormontiert) bzw. sogar untrennbar einstückig ausgebildet, so dass ein Benutzer fehlerrobust nur ein einziges Befestigungselement zu handhaben hat, um die Befestigung der Platte an dem weichen Untergrund durch das gestanzte Loch unter Verwendung des Befestigungselements zu bewerkstelligen. Von seinem internen Aufbau her hat das Befestigungselement einen Dübelkörper, der ein zum Einbringen in den weichen Untergrund ausgebildetes Außengewinde aufweist, hat als zweite Komponente einen im montierten Zustand plattenaußenseitig angeordneten Kopf, und hat als dritte Komponente eine an einem dem Kopf gegenüberliegenden fußseitigen Ende eine hochstabile Vorschubspitze (zum Beispiel - aber nicht zwingend - mit einem weiteren Gewinde mit kleinerem Abstand zwischen benachbarten Gewindegängen als beim Gewinde des Dübelkörpers). Wenn der weiche Untergrund (zum Beispiel Styropor) an seiner Oberfläche mit einer härteren dünnen (zum Beispiel 1 bis 3 mm dicken) Deckverputzschicht (zum Beispiel einem Putz aus Kunstharz) versehen ist, kann die spitz zulaufende Vorschubspitze die härtere Deckverputzschicht mit Vorschub durchdringen und dadurch die Grundlage dafür schaffen, dass nachfolgend der Dübelkörper mit seinem Gewinde selbstbohrend in den weichen Untergrund eingedreht werden kann.

Durch diese Maßnahmen ist es möglich, Spenglerarbeiten signifikant zu vereinfachen und mit geringerem Zeitaufwand, somit auch kostengünstiger und fehlerrobuster, durchzuführen, wobei gleichzeitig die Präzision des Setzens des Befestigungselements sowie die vorzugsweise wasserdichte Befestigung der Platte an dem weichen Untergrund verbessert werden. Die Handhabung eines solchen Montagesystems ist durch einen einzigen Monteur möglich.

Im Weiteren werden zusätzliche exemplarische Ausführungsbeispiele des erfindungsgemäßen Verfahrens, der offenbarten Anordnung, der offenbarten Lochstanze, des offenbarten Befestigungselements, des offenbarten Kits und der offenbarten Verwendung beschrieben.

Gemäß einem Ausführungsbeispiel kann mittels einer Abstandseinstelleinrichtung der Lochstanze nacheinander zum Stanzen mehrerer Löcher jeweils eine Stanzposition definiert werden, an der die jeweiligen Löcher in definiertem Abstand voneinander, insbesondere äquidistant, in die Platte gestanzt werden. Indem einstückig mit der Lochstanze, d.h. ohne separate Bauteile, eine Abstandseinstelleinrichtung vorgesehen ist, mit der ein Benutzer einen gewünschten Lochabstand zunächst vordefinieren und nachfolgend eine Lochzielposition einfach abmessen und bestimmen kann, kann das Ausbilden von präzise positionierten Mustern von Befestigungselementen erleichtert werden. Ein Benutzer hat hierfür nur ein erstes Loch zu stanzen und dann mittels der Abstandseinstelleinrichtung dieses als Referenzposition zum Abmessen eines bestimmten Abstands ausgehend von diesem Loch heranzuziehen. Separate Werkzeuge sind zum Ausbilden äquidistanter und daher besonders zuverlässiger Befestigungselementstrukturen nicht erforderlich.

Gemäß einem Ausführungsbeispiel kann der Dübelkörper mit einem Aufnahmehohlraum versehen sein. Ferner kann das Befestigungselement eine Dichtschraube mit einem bis zu einem Anschlag (insbesondere bis zu einem solchen Anschlag, dass nach Erreichen des Anschlags ein weiteres Eindrehen verunmöglicht ist) in dem Aufnahmehohlraum eingedrehten Gewindeschaft aufweisen, der an dem ersten Ende die Dichtkappe (wobei die Dichtkappe vorzugsweise kopfseitig gegenüber dem Dübelkörper vorsteht) und an dem gegenüberliegenden zweiten Ende die Vorschubspitze (wobei der Gewindeschaft vorzugsweise unter Freilegen der Vorschubspitze fußseitig gegenüber dem Dübelkörper vorsteht) aufweist. Das Befestigungselement kann während der Montage durch das Loch dringen, bis die Dichtkappe das Loch in der Platte dichtend abschließt (d.h. fest entlang einer Umrandung des Lochs auf der Platte aufliegt). Der Dübelkörper und die Dichtschraube können als einstückig vormontierte Einheit ausgebildet sein. Gemäß dieser Ausgestaltung ist das Befestigungselement aus zwei Komponenten, nämlich dem Dübelkörper und der Dichtschraube, gebildet, die fest aneinander montiert sein können. Diese Ausgestaltung hat den Vorteil, dass das Material des Dübelkörpers auf dessen Funktion hin optimiert sein kann, zum Beispiel aus Kunststoff hergestellt sein kann. Entsprechend kann auch das Material der Dichtschraube auf dessen Funktion hin optimiert sein, zum Beispiel aus Metall hergestellt sein. Ein Ende der Dichtschraube kann dann die Vorschubspitze bilden, die beispielsweise bei Ausbildung aus Metall oder Hartkunststoff die erforderlichen Härte aufweist, um eine ausreichend große Vorschubkraft auf die Deckverputzschicht aufzubringen, um diese zu durchstoßen. Außenseitig steht dann die zum Beispiel metallische Kappe gegenüber der Platte hervor, so dass eine zuverlässige Dichtung ermöglicht werden kann.

Gemäß der zuvor beschriebenen Ausführungsform ist somit das Befestigungselement aus zwei fest aneinander montierten Teilen gebildet, von denen das eine das andere umschließt. Alternativ dazu ist es auch möglich, das Befestigungselement aus einem einzigen zusammenhängenden, vorzugsweise einstoffigen, Teil auszubilden. Dann kann das gesamte Befestigungselement zum Beispiel aus einem Hartkunststoff hergestellt werden, sodass auch die Vorschubspitze ausreichende Festigkeit für ihre Funktion aufweist.

Gemäß einem Ausführungsbeispiel können die Dichtschraube und der Gewindeschaft während des Einbringens keiner Relativbewegung zueinander unterzogen werden bzw. bleiben während des (zum Beispiel bezogen auf ein Laborsystem drehenden) Einbringvorgangs relativ zueinander orts- und orientierungsfest. Anders ausgedrückt können Dichtschraube und Gewindeschaft fabrikseitig untrennbar voneinander ausgebildet werden. Zum Beispiel können diese beiden Komponenten miteinander verklebt werden, um eine unerwünschte Trennoperation durch einen Benutzer auszuschließen. Anstelle einer Klebeverbindung kann auch eine Presssitzverbindung, eine Verriegelungsverbindung oder dergleichen erfolgen. Während des Eindrehens des Befestigungselements durch Ansetzen eines Bits eines Schraubendrehers an einem entsprechenden Längsschlitz, Kreuzschlitz, Sechskant- oder Imbusanschlusses an der Dichtschraube kann ein Eindrehen des gesamten Befestigungselements in den weichen Untergrund gemeinsam erfolgen, ohne dass Dichtschraube und Dübelkörper voneinander separiert werden oder getrennt oder gelöst betätigt werden.

Gemäß einem Ausführungsbeispiel kann das Loch mit einem Lochdurchmesser gestanzt werden, der - im Rahmen eines technisch bedingten Spiels - einer Summe aus einem Kerndurchmesser des Dübelkörpers und einer Gewindehöhe (insbesondere in radialer Richtung) eines Außengewindes als Außenprofil des Dübelkörpers entspricht. Somit kann die durch die Stanzeinrichtung der Stanze definierte Stanzlochgröße auf die Dimensionen des Befestigungselements angepasst sein, so dass ein fehlerrobuster Betrieb des Gesamtsystems ermöglicht ist. Das gestanzte Loch passt von seiner Größe her dann immer mit dem Befestigungselement zusammen, so dass Letzteres an der Platte dichtend in dem Loch befestigt werden kann.

Gemäß einem Ausführungsbeispiel kann die Abstandseinstelleinrichtung einen selektiv gegenüber der Plattenaufnahme verschiebbaren Abstandseinstellkörper aufweisen, wobei mittels Verschiebens des Abstandseinstellkörpers an eine einstellbare Position der Abstand der Stanze von der Referenzposition benutzerdefiniert einstellbar ist. Gemäß dieser Ausgestaltung ist eine Abmesseinrichtung in Form eines Abstandseinstellkörpers direkt untrennbar an der Handstanze vorgesehen, der derart verschoben werden kann, dass ein bestimmter Abstand einer Zielstanzposition zu einer Referenzposition justiert werden kann. Dies ermöglicht eine hohe räumliche Präzision.

Gemäß einem Ausführungsbeispiel kann die Lochstanze eine Arretiereinrichtung aufweisen, mittels welcher der Abstandseinstellkörper an der Plattenaufnahme arretierbar ist, wobei mittels Arretierens des Abstandseinstellkörpers an der einstellbaren Position der Abstand von der Referenzposition benutzerdefiniert vorübergehend (d.h. lösbar) fest einstellbar ist. Wenn der Abstandseinstellkörper an einer bestimmten Position arretiert werden kann, zum Beispiel mittels einer Feststellschraube oder eines in Nuten des Abstandseinstellkörpers eingreifenden Rastkörpers, kann sichergestellt werden, dass während der gesamten Handhabung bzw. Montage einer Platte an einem weichen Untergrund alle Abstände zwischen benachbarten Befestigungselementen gleich groß eingestellt werden können. Auf separate Abmesseinrichtungen oder dergleichen kann somit verzichtet werden, so dass die Anzahl der Komponenten, die ein Benutzer an einer Baustelle mit sich zu führen hat, sehr gering gehalten werden kann.

Gemäß einem Ausführungsbeispiel kann die Plattenaufnahme eine Abstandseinstellführung zum Definieren einer linearen Verschieberichtung des Abstandseinstellkörpers aufweisen, welche Verschieberichtung in einer Aufnahmeebene liegt, in der die Platte an der Plattenaufnahme aufnehmbar ist. Eine solche Abstandseinstellführung kann zum Beispiel eine Führungsaussparung sein, welche eine zu dem Abstandseinstellkörper kongruente Form hat. Wenn der Abstandseinstellkörper entlang der Plattenaufnahme als zylindrischer Stab geführt wird, so kann die Abstandseinstellführung eine korrespondierend ausgebildete hohlzylindrische Aussparung in der Plattenaufnahme sein. Dann kann der Abstandseinstellkörper nur entlang einer Richtung gegenüber der Plattenaufnahme verschoben werden, so dass eine besonders einfache Handhabung ermöglicht ist.

Gemäß einem Ausführungsbeispiel kann die mittels der Führung zugelassene Verschieberichtung orthogonal zu einer Stanzrichtung orientiert sein, entlang welcher die Stanzeinrichtung das Loch in die aufgenommene Platte stanzt. Dann kann senkrecht zu der Platte gestanzt und in der Plattenebene ein gewünschter Soll-Abstand abgemessen werden.

Gemäß einem Ausführungsbeispiel kann der Abstandseinstellkörper eine Verschiebestange mit einer endseitigen Anlegehilfe, insbesondere mit einer endseitigen Abwinkelung, weiter insbesondere mit einer endseitigen rechtwinkligen Abwinkelung, aufweisen, die an die Referenzposition anlegbar ist. Die Anlegehilfe kann ganz verschieden ausgestaltet sein, solange sie ein Anlegen an die Referenzposition ermöglicht, wonach ein gewünschter Abstand eingestellt werden kann. Eine exemplarische Konfiguration aus Verschiebestange und endseitiger Abwinklung kann zu einem L-förmigen Abstandseinstellkörper führen, wobei vorzugsweise das lange Ende des L zum Verschieben gegenüber dem Plattenkörper geführt ist und das insbesondere rechtwinklig dazu abgeknickte kürzere Stück des L als Anlegehilfe ermöglicht, einen Abstand zwischen dem längeren Verlaufsstück des L und einer in der Plattenaufnahme aufgenommenen Platte zu überbrücken. Es sind allerdings viele alternative Gestaltungen möglich, wie zum Beispiel eine lineare Verschiebestange und ein senkrecht dazu emittierter Lichtstrahl einer Laserdiode oder dergleichen, der auf die Platte gerichtet wird, um die Referenzposition optisch anzuzeigen.

Gemäß einem Ausführungsbeispiel kann der Abstandseinstellkörper eine Messskala zum Anzeigen eines gegenwärtig eingestellten Abstands aufweisen. Mit einer solchen Skala, insbesondere ein Zentimeter- oder Millimetermaßstab, ist eine quantitative Einstellung des Abstands möglich, so dass ein Benutzer auf einen Blick angezeigt bekommt, welchem Abstand zu einer Referenzposition eine gegenwärtige Positionierung der Plattenaufnahme entspricht.

Gemäß einem Ausführungsbeispiel kann die Plattenaufnahme zwei, einen Aufnahmeschlitz zum Aufnehmen des Abschnitts der Platte begrenzenden gegenüberliegende Plattenaufnahmebacken aufweisen, wobei an einer der aufgenommenen Platte zugewandten Innenseite von zumindest einer der Plattenaufnahmebacken die Stanzeinrichtung vorgesehen ist. Zwei solche Plattenaufnahmebacken können zwei zum Beispiel quaderförmige Körper mit zueinander parallel beabstandeten ebenen Flächen sein, die einen kleinen Schlitz mit einer Dimension aufweisen, die in etwa der Dimension von zu stanzenden Platten entspricht. Zum Beispiel kann der Aufnahmeschlitz eine Dicke in einem Bereich zwischen 1 mm und 5 mm aufweisen.

Gemäß einem Ausführungsbeispiel kann der Stanzaktuator von einem Benutzer derart betätigbar sein, dass durch Betätigen des Stanzaktuators die an der Innenseite von zumindest einer der Plattenaufnahmebacken vorgesehene Stanzeinrichtung (zum Beispiel eine Stanzschneide) bewegbar ist, bis die Stanzeinrichtung das Loch in die aufgenommene Platte stanzt. Somit kann im Inneren der Stanzaufnahmeplatten eine zum Beispiel kreisrunde Schneidkante durch Betätigen des Stanzaktuators (zum Beispiel ein Hebel oder Knopf) bewegt werden, um das Stanzen eines Lochs in der Blechplatte auszulösen bzw. durchzuführen. Gemäß einem Ausführungsbeispiel kann die Stanzschneide so betätigt werden, dass die Innenfläche einer der Plattenaufnahmebacken als ebene Auflage für die Platte und Gegenfläche für die Stanzschneide dient.

Gemäß einem Ausführungsbeispiel kann der Stanzaktuator zwei zueinander schwenkfähig gelagerte Hebelarme aufweisen, deren jeweiliges eines Ende als Griffstück zum Ergreifen durch einen Benutzer ausgebildet ist, so dass mittels Schwenkens der Hebelarme relativ zueinander das Stanzen des Lochs mittels Bewegens der Stanzeinrichtung ausgelöst bzw. durchgeführt wird. Vorzugsweise ist eines der Griffstücke fest und das andere beweglich montiert. Somit können die beiden Hebelarme durch eine zusammendrückende Handbewegung um eine durch ein gemeinsames Lager definierte Schwenkachse geschwenkt werden, zum Beispiel indem ein Benutzer die beiden Griffstücke aufeinander zu bewegt. Den Griffstücken gegenüberliegende Endstücke des Stanzaktuators bewegen sich dabei aufeinander zu, womit die Stanzeinrichtung, insbesondere eine zum Beispiel kreisförmige Schneidkante, auf die an der Plattenaufnahme aufgenommenen Platte zu bewegt wird, um die Lochstanzung auszulösen. Alternativ kann die Stanze aber auch mit einer maschinengesteuerten Stanzeinrichtung versehen sein, welche die für den Stanzvorgang erforderliche Kraft bzw. Energie einer Antriebseinrichtung, wie zum Beispiel einem Elektromotor, entnimmt.

Gemäß einem Ausführungsbeispiel kann die Stanzeinrichtung eingerichtet sein, ein kreisrundes Loch in die Platte zu stanzen. Das Bilden eines kreisrunden Lochs in der Platte ist mittels Stanzens gegenüber dem Verwenden eines Bohrers wesentlich genauer möglich, da durch das geführte Aufnehmen der Platte an der Plattenaufnahme und durch das definierte Bewegen der Stanzeinrichtung eine präzise kreisrunde Stanzung durch eine kreisrunde Schneidkante der Stanzeinrichtung sichergestellt werden kann.

Gemäß einem Ausführungsbeispiel kann die Plattenaufnahme mit einem verstellbaren Tiefenanschlag zum Einstellen eines Abstands eines gestanzten Lochs von einem Rand der Platte versehen sein, an welchen Rand der Tiefenanschlag anschlägt, wenn die Platte von der Plattenaufnahme aufgenommen ist. Zum Beispiel kann ein solcher justierbarer Tiefenanschlag durch ein Stellglied mit mechanischem Anschlag ausgebildet sein, das ein Benutzer betätigen (zum Beispiel entlang des Schlitzes der Plattenaufnahme verschieben) kann, um eine Eindringtiefe der Platte zwischen den Plattenaufnahmebacken zu beschränken. Ist die einstellbare maximale Eindringtiefe der Platte in die Plattenaufnahme erreicht, so schlägt der Rand der Platte gegen den an einer bestimmten Stelle fixierten mechanischen Anschlag des Stellglieds an, wodurch ein tieferes Einführen der Platte in die Plattenaufnahme verunmöglicht ist.

Gemäß einem Ausführungsbeispiel von Befestigungselement, Verfahren, Anordnung, Kit und Verwendung kann die erste Härte eine metallische Härte sein (zum Beispiel die Härte von Stahl, Edelstahl oder einem Hartkunststoff). Ein entsprechendes Material mit einer für Metalle charakteristischen Härte ermöglicht ein Anritzen und Durchdringen der Deckverputzschicht mittels der Vorschubspitze. Somit kann die Vorschubspitze aus einem Metall (zum Beispiel Stahl, Edelstahl) oder aus einem Hartkunststoff hergestellt sein.

Gemäß einem Ausführungsbeispiel kann die dritte Härte eine Kunststoffhärte sein (zum Beispiel die Härte von Polyethylen oder Polyamid). Ein entsprechendes Material mit einer für Kunststoffe charakteristischen Härte ermöglicht ein Eindrehen des Dübelkörpers in den weichen Untergrund. Somit kann der Dübelkörper aus einem Kunststoff (zum Beispiel Polyethylen) hergestellt sein.

Die zweite Härte (der Deckverputzschicht) kann quantitativ zwischen der ersten Härte und der dritten Härte liegen.

Gemäß einem Ausführungsbeispiel kann der Kopf eine Dichtkappe als dichtenden Abschluss an dem ersten Ende des Dübelkörpers aufweisen, wenn das Befestigungselement in ein Loch in der Platte befestigend eingedreht ist. Eine solche Dichtkappe dient zum dichtenden Verschließen der Metallplatte und erlaubt eine wasserdichte Verbindung zwischen Platte und Befestigungselement.

Gemäß einem Ausführungsbeispiel kann die Vorschubspitze mit einem zweiten Außengewinde versehen sein. Ein speziell auf das Anritzen und Durchdringen der Deckverputzschicht angepasstes Außengewinde der Vorschubspitze erlaubt es, den Befestigungsvorgang besonders zuverlässig und kraftarm auszuführen.

Gemäß einem Ausführungsbeispiel kann sich das zweite Außengewinde ausgehend von einem freien Endpunkt der Vorschubspitze erstrecken. Insbesondere kann das Vorderende des vordersten Gewindegangs des zweiten Außengewindes am absoluten Vorschubspitzenende beginnen, welches Vorschubspitzenende vom Kopf des Befestigungselements maximal weit entfernt ist. Dadurch kann sichergestellt werden, dass an dem freien Endpunkt der Vorschubspitze das zweite Außengewinde die Deckverputzschicht anritzt und somit die Grundlage für ein präzise geführtes drehendes Ein- und Durchdringen der Deckverputzschicht durch das Gewinde der Vorschubspitze legt.

Gemäß einem Ausführungsbeispiel kann das erste Außengewinde ein Dübelgewinde und das zweite Außengewinde ein Holzschraubengewinde sein. Das Dübelgewinde kann hinsichtlich seines Materials (insbesondere Kunststoff) und/oder hinsichtlich seiner Ganghöhe (insbesondere vergleichsweise weiter Abstand zwischen benachbarten Windungen) auf die Funktion des Eindrehens in den weichen Untergrund angepasst sein. Das Holzschraubengewinde kann hinsichtlich seines Materials (insbesondere Metall oder Hartkunststoff) und/oder hinsichtlich seiner Ganghöhe (insbesondere vergleichsweise niedrigerer Abstand zwischen benachbarten Windungen) auf die Funktion des kraftvollen und führenden Durchstoßens einer härteren Deckverputzschicht auf dem weichen Untergrund angepasst sein.

Gemäß einem Ausführungsbeispiel kann das erste Außengewinde eine erste Ganghöhe (d.h. einem axialen Abstand benachbarter Windungen) und kann das zweite Außengewinde eine zweite Ganghöhe haben, wobei die erste Ganghöhe größer als die zweite Ganghöhe ist. Dadurch sind die beiden Außengewinde beide auf ihre jeweilige Funktion (Eindrehen in den weichen Untergrund bzw. Durchdringung der Deckverputzschicht) hin angepasst.

Alternativ können die beiden Gewinde auch die gleiche Steigung haben.

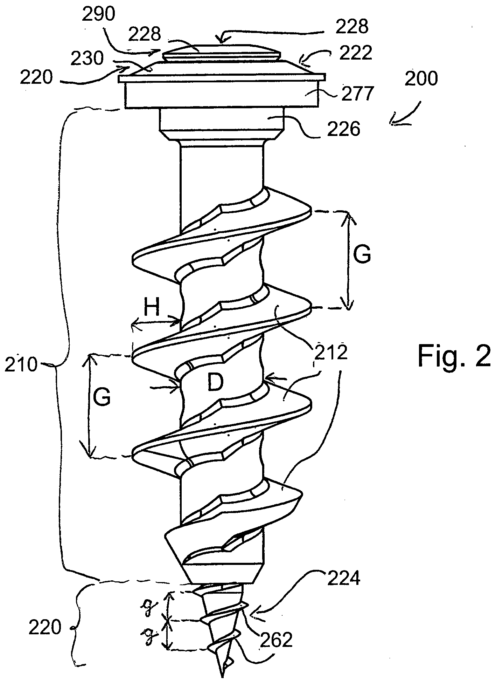

Gemäß einem Ausführungsbeispiel kann die erste Ganghöhe mindestens ungefähr das Doppelte, insbesondere mindestens ungefähr das Dreifache, der zweiten Ganghöhe sein. Auch kann die radiale Ausdehnung des Gewindes im Bereich des Dübelkörpers größer sein als im Bereich der Vorschubspitze. Gemäß einem Ausführungsbeispiel kann die radiale Ausdehnung des Gewindes im Bereich des Dübelkörpers mindestens das Doppelte, insbesondere mindestens das Dreifache, der radialen Ausdehnung des Gewindes im Bereich der Vorschubspitze sein (siehe zum Beispiel Fig. 2).

Gemäß einem Ausführungsbeispiel kann das Befestigungselement einen Antrieb an dem Kopf, insbesondere an der Dichtkappe, zum insbesondere drehenden Antreiben des Befestigungselements mittels eines Antriebswerkzeugs, insbesondere mittels eines Schraubendrehers, aufweisen. Ein solcher Antrieb kann zum Beispiel eine Formaussparung (zum Beispiel ein Längsschlitz, ein Kreuzschlitz, ein Sechskant, einen Torx-Antrieb, einen AW-Antrieb oder eine andere Nut) in einer Stirnfläche des Kopfes sein, in die ein Antriebswerkzeug wie zum Beispiel ein Akkuschrauber eingreifen kann.

Gemäß einem Ausführungsbeispiel können der Dübelkörper und die Dichtschraube untrennbar miteinander verbunden sein. Anders ausgedrückt ist es gemäß dieser Ausgestaltung nicht zerstörungsfrei möglich, Dübelkörper und Dichtschraube voneinander zu separieren. Dadurch ist eine unsachgemäße Verwendung des einstückig vorgefertigten und einstückig zu verwendenden Befestigungselements zuverlässig ausgeschlossen und dadurch die Betriebssicherheit erhöht sowie die Fehlerrobustheit verbessert.

Gemäß einem Ausführungsbeispiel kann der Dübelkörper von einem Aufspreizkörper, der bei Montieren des Befestigungselements aufspreizt, frei sein. Während ein herkömmlicher Dübel häufig darauf basiert, dass er bei Aufnehmen eines Körpers in seinem Inneren, zum Beispiel einer zugehörigen Schraube, aufspreizt und durch Bilden von Hinterschnitten oder sonstigen formschlüssigen Verbindungen mit einem Untergrund die Verbindung ermöglicht, ist im Rahmen der vorliegenden Offenbarung der Dübelkörper vorgefertigt an der Dichtschraube angebracht. Dadurch wird der Dübelkörper eher schraubenartig in einen Untergrund eingedreht und bildet daher den Formschluss mit dem weichen Untergrund dadurch, dass er sich selbst in dem weichen Untergrund eine Art Gewinde schneidet. Ein Aufspreizen des Dübels ist aber vermieden, was eine einfache Konstruktion des Dübels ermöglicht.

Gemäß einem Ausführungsbeispiel kann eine Vorschubspitze der Dichtschraube endseitig über den Dübelkörper hinausstehen. Indem eine Metallspitze der Dichtschraube endseitig über den Kunststoffdübelkörper hinausragt, ist die beim Eintreiben in den Untergrund einer besonderen mechanischen Belastung ausgesetzte Vorschubspitze des Befestigungselements besonders robust ausgebildet. Eine solche spitz zulaufende Endspitze der Dichtschraube kann auch die Eintreibrichtung präzise vorgeben.

Gemäß einem Ausführungsbeispiel kann der Dübelkörper direkt angrenzend an die Dichtkappe (zum Beispiel die Dichtkappe berührend) einen (insbesondere kreis-)zylindrischen Absatz aufweisen. Auch kopfseitig des Befestigungselements bzw. außenseitig der Platte kann somit eine metallische Führungsstruktur in Form eines kreiszylindrischen Ansatzstücks vorgesehen sein, der eine korrekte Positionierung der Dichtkappe und eines angrenzenden Abschnitts der Dichtschraube an der Platte sowie letztlich auch in dem weichen Untergrund sicherstellt. Ein solcher zylindrischer Absatz dient somit als Führungsstruktur und Verkippschutz zum Vorgeben einer korrekten Verankerungsrichtung und Position des Befestigungselements in Platte und Untergrund. Alternativ oder ergänzend kann die Dichtschraube angrenzend an den Kopf einen zylindrischen, insbesondere einen kreiszylindrischen, Absatz aufweisen.

Gemäß einem Ausführungsbeispiel kann die Dichtkappe zwei hintereinander angeordnete Einzelkappen aufweisen. Die untere der beiden Einzelkappen liegt plan auf der gestanzten Platte auf und stellt eine Dichtung sicher. Die obere der beiden Einzelkappen kann einen Ansatz (zum Beispiel einen Kreuzschlitz) für einen Schraubendreher oder ein anderes Werkzeug enthalten und das nach außen hin sichtbare Endstück des Befestigungselements bilden.

Im Folgenden werden exemplarische Ausführungsbeispiele des erfindungsgemäßen Verfahrens mit Verweis auf die folgenden Figuren detailliert beschrieben.
Fig. 1 zeigt eine Handstanze.
Fig. 2 zeigt ein einstückig vorgefertigtes Befestigungselement.
Fig. 3 zeigt eine Anordnung aus einer Dämmstoffplatte, einem Metallblech und einem einstückig vorgefertigten Befestigungselement, die gemäß einem exemplarischen Ausführungsbeispiel der Erfindung mittels einer Handstanze und einem Schraubendreher aneinander befestigt wurden.
Fig. 4 und Fig. 5 zeigen unterschiedliche Ansichten einer Handstanze.

Gleiche oder ähnliche Komponenten in unterschiedlichen Figuren sind mit gleichen Bezugsziffern versehen.

Bevor unter Bezugnahme auf die Zeichnungen exemplarische Ausführungsbeispiele beschrieben werden, werden einige Aspekte der Erfindung allgemein dargestellt.

Es wird eine Handlochstanze offenbart, die als Bestandteil eines Dübelsystems, d.h. gemeinsam mit Befestigungselementen, eingesetzt werden kann. Im Unterschied zu einem Bohrer, mit dem es nicht möglich ist, in Feinbleche oder Spenglerkantteile ein exakt rundes Loch zu bohren, kann dies durch die Handlochstanze bequem und präzise erreicht werden. Eine solche Lochstanzung geht vorteilhaft dem Einsetzen eines Befestigungselements in ein gestanztes Loch voraus. Die Handlochstanze kann mit einem verstellbaren Tiefenanschlag und mit einem Anschlag zur Einstellung des Lochabstandes ausgerüstet sein.

Ein zugehörig einsetzbarer Spenglerdübel als Befestigungselement ermöglicht es, in Durchsteckmontage einen Dübelkörper als Isolationsdübel und eine Spenglerdichtschraube bei der Befestigung von Blechteilen an Vollwärmeschutzfassaden in einem Arbeitsgang zu verarbeiten. Mit der Handstanzzange kann in die zu befestigenden Blechteile ein Rundloch gestanzt werden, wobei sich der Lochdurchmesser vorteilhaft aus der Summe von Kerndurchmesser und Gewindehöhe des Spenglerdübels ergibt.

Der Spenglerdübel besteht aus einem vorzugsweise aus Kunststoff hergestellten Teil in der Form ähnlich eines Isolationsdübels und einer vorzugsweise metallischen Spenglerdichtschraube. Diese beiden Komponenten können in der Produktion bereits zusammengefügt werden und bilden während der Montage eine Einheit. Die Schraubenspitze ragt vorzugsweise gegenüber dem Dübelkörper hervor, um die Fassadenoberfläche (zum Beispiel Putz- bzw. Spachtelschicht) aufzureißen. Dies erleichtert das Eindrehen in die Dämmstoffplatte, so dass ein Vermurksen des Kunststoffdübels beim Eindrehen vermieden ist. Am hinteren, plattenseitigen Ende des Dübelkörpers kann ein zylindrischer Absatz ausgebildet sein, welcher bewirkt, dass der Dübelkörper (und in der Folge das gesamte Befestigungselement) im Stanzloch zentriert wird. Dadurch kann sichergestellt werden, dass die Dichtscheibe das Stanzloch sauber abdeckt. Eine Dichtscheibe oder -kappe der Dichtschraube übernimmt die Funktion einer Einschraubbegrenzung und wird im gesetzten Zustand an die zu montierende Platte angepresst. Der Dübelkörper kann gegenüber herkömmlichen Ansätzen länger ausgebildet sein, womit bessere Befestigungswerte erreichbar sind. Seine Länge kann an eine Dichtschraube mit 60 mm Länge angepasst sein.

Gemäß einem Ausführungsbeispiel der Erfindung kann das beschriebene einteilige Befestigungselement aus Dübelkörper und Dichtschraube mittels eines sehr einfachen Montageverfahrens gesetzt werden, bei dem wenige Arbeitsschritte ausreichend sind und das in der Regel von nur einer Person durchgeführt werden kann:
1. Anzeichnen eines ersten Lochs am Kantteil, wobei der Lochabstand zwischen diesem und nachfolgenden Löchern an der Handlochstanze eingestellt werden kann.
2. Stanzen der Löcher am Kantteil.
3. Eine Akkubohrmaschine oder dergleichen wird mit einem passenden Bit bestückt.
4. Anhalten des Kantteils an die Dämmstoffplatte oder dergleichen.
5. Eindrehen des Befestigungselements mittels der Akkubohrmaschine oder dergleichen.

Für ein solches System bieten sich insbesondere die folgenden, aber auch zahlreiche weitere Einsatzmöglichkeiten: Montage von Sockelschutzblenden, Kittleisten, Putzleisten, Putzprofilen, Verwahrungsleisten, Wandanschlussblechen, Wandverbiegungen, Gesimsabdeckungen, Lüftungsabdeckungen, Kiesleisten, Briefkästen, Beleuchtungskörper, Hausnummern-, Werbe- und Firmenschilder, Wegweiser, Insektenschutzgitter, Schutznetze gegen Tauben oder andere Vögel, etc.

Es soll noch angemerkt werden, dass das Befestigungselement zwar in dem erfindungsgemäßen Verfahren in Kombination mit einer Lochstanze eingesetzt wird, dass in anderen, nicht erfindungsgemäßen Ausführungsformen aber auch das einstückige Befestigungselement in Kombination mit einem Bohrer zum Bohren der Löcher oder mit anderen Locherzeugungswerkzeugen eingesetzt werden kann. Entsprechend kann die Lochstanze mit Abstandseinstellfunktion zwar besonders vorteilhaft in Kombination mit einem einstückigen Befestigungselement eingesetzt werden kann, wobei aber in anderen Ausführungsformen die Lochstanze auch für andere Anwendungszwecke eingesetzt werden kann (zum Beispiel mit einem zweiteiligen Befestigungssystem aus getrenntem Dübel und Dichtschraube).

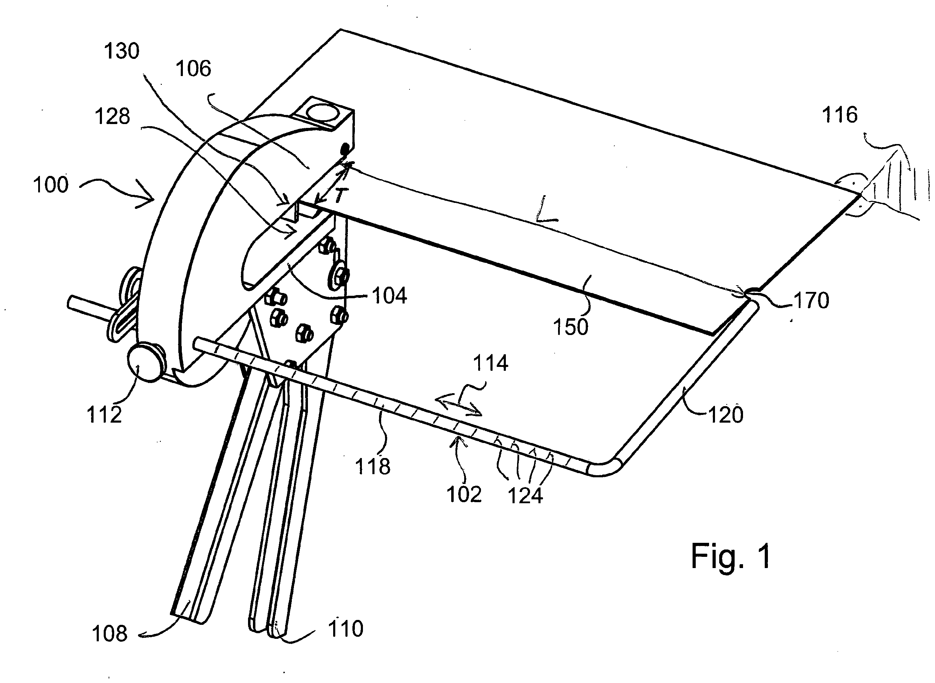

**Fig. 1** zeigt eine Handlochstanze 100 zum Stanzen kreisrunder Löcher in einem Metallblech 150.

Die Handlochstanze 100 ist speziell dazu ausgebildet, ein Loch in einem einstellbaren Abstand L von einer Referenzposition 170 aus stanzen zu können, den ein Benutzer mittels der Lochstanze 100 präzise vordefinieren kann. Die Referenzposition 170 ist im gezeigten Fall ein bereits zuvor gestanztes Loch.

Die Handlochstanze 100 hat eine Plattenaufnahme zum Aufnehmen eines Abschnitts des Metallblechs 150, die zwei einander gegenüberliegende und einen Aufnahmeschlitz 128 definierende Plattenaufnahmebacken 104, 106 aufweist. Der Aufnahmeschlitz 128 dient dazu, einen räumlich eng begrenzten Abschnitt der zu stanzenden Metallplatte 150 aufzunehmen bzw. in Eingriff zu nehmen, um in diesem Abschnitt nachfolgend ein Loch zu stanzen.

Ein Stanzaktuator der Handlochstanze 100 ist durch zwei relativ zueinander drehbar gelagerte Hebelarme 108 und 110 ausgebildet, und weist an einem gemäß Fig. 1 unterseitigen Endabschnitt zwei Griffstücke auf, an denen ein Benutzer den Stanzaktuator greifen kann. Eines der Griffstücke kann fest, dass andere beweglich an der Handlochstanze 100 montiert sein.

Im Inneren des Aufnahmeschlitzes 128 befindet sich, zum Beispiel bewegbar gegenüber einer oder beider Plattenaufnahmebacken 104, 106, eine kreisrunde Schneidkante (nicht gezeigt) als Stanzeinrichtung, die bei Betätigung der Hebelarme 108, 110 durch einen Benutzer das Loch in den von den Plattenaufnahmebacken 104, 106 aufgenommenen Abschnitt der Blechplatte 150 stanzt.

Vorteilhaft ist an der Lochstanze 100 eine im Weiteren näher beschriebene Abstandseinstelleinrichtung 102 vorgesehen, die dazu eingerichtet ist, eine Stanzposition zu definieren, in der das jeweils nächste Loch in dem benutzerseitig einstellbaren Abstand L von dem Referenzloch 170 aus zu stanzen ist.

Die Abstandseinstelleinrichtung 102 ist als L-förmig abgewinkelte Metall- oder Kunststoffstange ausgebildet, die einen Verschiebeabschnitt 118 und einen Referenzabschnitt 120 aufweist. Der Verschiebeabschnitt 118 ist als langgestreckte Stange mit einer Längenmessskala 124 ausgebildet, die in einer kreiszylindrischen Führungsaussparung in der Plattenaufnahmebacke 106 ausgebildet ist. In dieser Aussparung ist die Abstandseinstellstange als Verschiebeabschnitt 118 hin und her verschiebbar, wie mit einem Doppelpfeil 114 angedeutet ist. Dadurch kann ein Benutzer den Verschiebeabschnitt 118 so weit verschieben, bis der Referenzabschnitt 120 das Referenzloch 170 endseitig berührt. Der Abstand der Stanzposition eines nachfolgend zu stanzenden Lochs an der die Metallplatte 150 aufnehmenden Position der Plattenaufnahmebacken 104, 106 ist dann anhand der Längenmessskala 124 für den Benutzer bequem ablesbar. Der Benutzer kann somit den Verschiebeabschnitt 118 soweit entlang der Führungsaussparung in der Plattenaufnahmebacke 106 verschieben, bis der anhand der Längenmessskala 124 ablesbare Ist-Abstand des neu zu stanzenden Lochs von dem Referenzloch 170 einem von dem Benutzer gewünschten Soll-Abstand entspricht. Hat der Benutzer den Ist-Abstand mit dem Soll-Abstand in Übereinstimmung gebracht, so kann er ein Arretierrädchen 112 (das als Madenschraube mit Rändelrand ausgebildet sein kann) betätigen und damit den Verschiebeabschnitt 118 an der aktuellen Position arretieren, so dass der Verschiebeabschnitt 118 ohne Lösen des Arretierrädchens 112 nicht mehr verschiebbar ist. Damit kann ein gewünschter Abstand fest eingestellt werden.

Fig. 1 zeigt ferner, dass eine Plattenebene 116 der ebenen Platte 150 die Verschieberichtung 114 enthält und senkrecht zu einer Stanzrichtung verläuft, die sich senkrecht zu der Ebene 116 zwischen den Plattenaufnahmebacken 104, 106 erstreckt und einer Stanzbewegungsrichtung einer Schneidkante der Handstanze 100 entspricht.

Mit einem verschiebbaren und arretierbaren Tiefenanschlag 130 kann die Größe des Tiefenanschlags T auf eine gewünschte Größe eingestellt werden.

Um äquidistante Löcher in der Platte 150 zu stanzen, wird mit der Handstanze 100 zunächst ein erstes Loch (etwa das Referenzloch 170) gestanzt, und dann ein gewünschter Abstand L zum nächsten Loch vordefiniert. Die Handstanze 100 wird dann entlang der Metallplatte 150 soweit verschoben, bis das Ende der Referenzstange 120 an der Referenzposition des zuvor gestanzten Referenzlochs 170 befindlich ist. Dann kann mit der Handstanze 100 ein weiteres Loch gestanzt werden, und diese Prozedur kann beliebig oft wiederholt werden.

**Fig. 2** zeigt ein einstückig vorgefertigtes Befestigungselement 200, das durch zuvor in einer Metallplatte 150 erzeugte, insbesondere gestanzte, Löcher hindurch in einen weichen Untergrund, wie zum Beispiel eine Dämmstoffplatte aus Styropor oder Mineralfasern, eingedreht werden kann. Hierfür enthält das Befestigungselement 200 einen Kopf 290 mit einem Antrieb 288 zum drehenden Antreiben des Befestigungselements 200 mittels eines Antriebswerkzeugs, insbesondere mittels eines Schraubendrehers (nicht gezeigt).

Dabei ist vorteilhaft, dass das Befestigungselement 200 einstückig gehandhabt wird, das heißt von einem Benutzer als Ganzes und in einem gemeinsamen Eintreibprozess in den Untergrund eingetrieben wird.

Das einstückig vorgefertigte Befestigungselement 200 dient zum Befestigen der mit einem Loch versehenen Metallplatte 150 an einer Dämmstoffplatte und enthält einen Kunststoffdübelkörper 210 sowie eine metallische Dichtschraube 220. Der Dübelkörper 210 aus Kunststoff hat ein helikales Außengewinde 212 zum Eindrehen in die Dämmstoffplatte und schneidet sich somit in dem relativ weichen Untergrund sein eigenes Gewinde selbst. Im Inneren des Dübelkörpers 210 ist ein Aufnahmehohlraum (nicht gezeigt) gebildet, in dem ein mittlerer Abschnitt der Dichtschraube 220 untergebracht ist. Diese ist (zum Beispiel mit einem Schraubendreher) bis zu einem Anschlag in den Aufnahmehohlraum eingedreht, so dass der Gewindeschaft der Dichtschraube 220 im Inneren des Dübelkörpers 210 befindlich ist und sogar endseitig mit seiner Vorschubspitze 224 über den Dübelkörper 210 hinaussteht, wobei die Vorschubspitze 224 ein fußseitiges Ende des Befestigungselements 200 bildet.

Der Vorschubspitze 224 gegenüberliegend liegt kopfendseitig des Befestigungselements 200 eine Dichtkappe 222 der Dichtschraube 220 aus Metall. Die Dichtkappe 222 bildet im in die Platte 150 eingebrachten Zustand einen flüssigkeitsdichten (zum Beispiel regensicheren) Abschluss. Die Dichtkappe 222 hat zwei seriell hintereinander angeordnete Einzelkappen 228, 230, von denen die untere Kappe 230, an deren Unterseite noch ein elastischer und dichtender Ring 277 (zum Beispiel aus Gummi, weiter insbesondere Ethylen-Propylen-Dien-Kautschuk) befestigt (zum Beispiel angeklebt) sein kann, plan und dichtend an der Blechplatte 150 anliegt und die obere Dichtkappe 228 einen (nicht gezeigten) Angriffsschlitz zum Angreifen eines Schraubendrehers oder dergleichen enthält.

Dichtschraube 220 und Dübelkörper 210 sind gemeinsam als einstückig vorgefertigte und zerstörungsfrei untrennbare Einheit ausgebildet, die von einem Benutzer nicht separiert werden bzw. nicht separiert werden können, womit die Fehlerrobustheit des Befestigungssystems gestärkt ist, das als Ganzes zu verarbeiten ist. Ein Benutzer kann somit nicht die Dichtschraube 220 von dem Dübelkörper 210 lösen, um diese getrennt zu verarbeiten. Der Dübelkörper 210 ist eher schraubenartig ausgebildet, ist von Aufspreizelementen frei und weist das selbstschneidende Gewinde 212 aus Kunststoff auf. Die endseitig über den Dübelkörper 210 hinausstehende Metallspitze 224 erlaubt ein sauberes Definieren einer Eintreibrichtung des Befestigungselements 200.

Ferner hat der Dübelkörper 210 angrenzend an die Dichtkappe 222 einen kreiszylindrischen Absatz 226, der am Ende des Verankerungsprozesses eine saubere Orientierung des Befestigungselements 200 in dem Loch der Platte 150 und in der Dämmstoffplatte sicherstellt, da er als Führungszylinder zum Vorgeben einer Einführrichtung senkrecht zu der Metallplatte 150 wirkt.

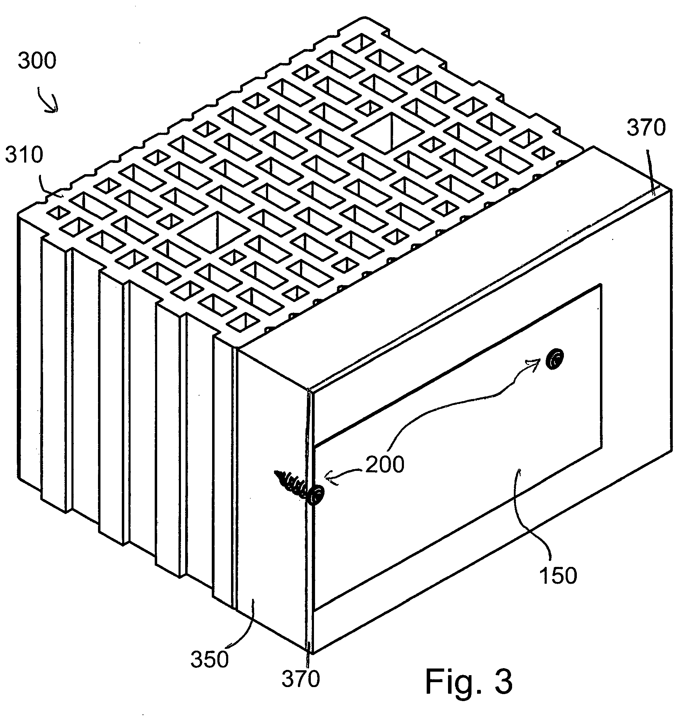

**Fig. 3** zeigt eine Anordnung 300, wie sie nach dem Befestigen der Metallplatte 150 an einer Dämmstoffplatte 350 mittels in diesem Fall zweier Befestigungselemente 200 erhalten wird. Eine Außenseite der Dämmstoffplatte 350 aus Styropor ist mit einer Deckverputzschicht 370 aus Kunstharz bedeckt, die eine Dicke von ungefähr 2 mm aufweist. Statt Kunstharzputz kann als Ober putz oder Endbeschichtung auch Silikonharzputz, Silikatputz, Silikat-Leichtputz, Mineralputz, Mineral-Leichtputz, Edelkratzputz, Flachverblender oder ein keramischer Beleg eingesetzt werden.

Zunächst wird an einem Mauerwerk 310, zum Beispiel aus Ziegel oder Hohlbeton oder Vollbeton, die Dämmstoffplatte 350 in an sich bekannter Weise angebracht bzw. befestigt. Dann werden in der Blechplatte 150 mittels der in Fig. 1 gezeigten Handstanze 100 Löcher an gewünschten Positionen, zum Beispiel eine Vielzahl äquidistanter Löcher, gebildet. Nachfolgend wird die lochgestanzte Blechplatte 150 auf die Dämmstoffplatte 350 aufgelegt. Ohne (oder alternativ mit) Vorbohrung in der Dämmstoffplatte 350 können dann die Befestigungselemente 200 selbstschneidend durch die äquidistanten Löcher in der Blechplatte 150 in die Dämmstoffplatte 350 eingetrieben werden, zum Beispiel mittels eines Schraubendrehers eingedreht werden. Die endseitig spitz und konisch zulaufende Vorschubspitze 224 mit ihrem Gewinde 262 durchdringt zunächst die Deckverputzschicht 370 und bereitet dadurch für den Dübelkörper 210 ein nachfolgendes selbstschneidendes, drehendes Eindringen des Dübelkörpers 210 in die Dämmstoffplatte 350 vor. Das Außengewinde 212 des Dübelkörpers 210 sorgt für eine Verankerung der Befestigungselemente 200 in der Dämmstoffplatte 350, wohingegen die Dichtkappe 222 der Dichtschraube 220 der Befestigungselemente 200 für einen dichtenden Übergang zwischen dem Befestigungselement 200 und der Blechplatte 150 sorgt. Eine erste Ganghöhe G des Dübelkörpers 210 beträgt in etwa das Dreifache einer zweiten Ganghöhe g der Vorschubspitze 224.

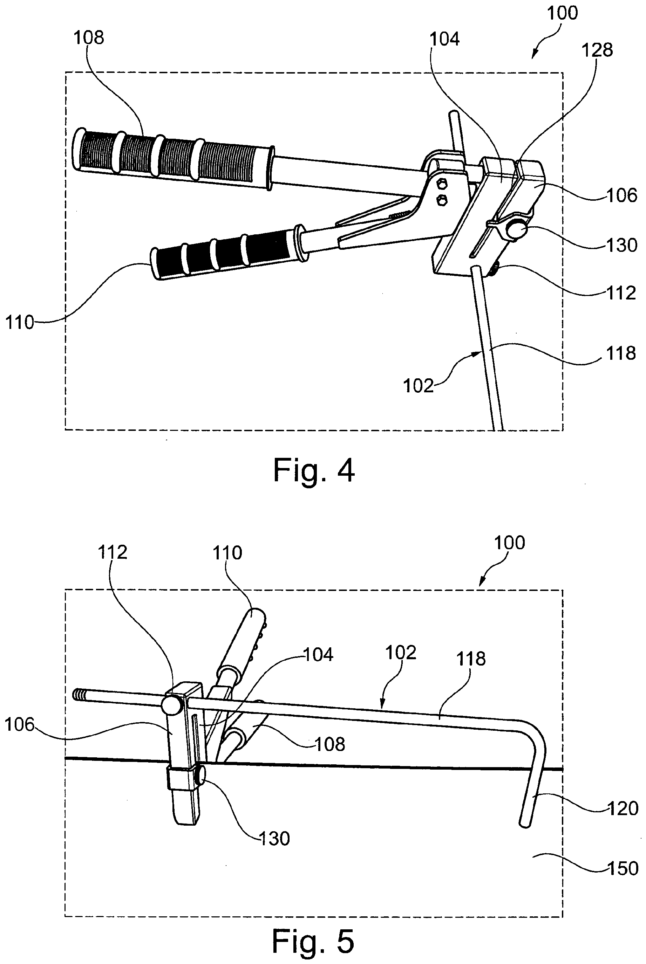

**Fig. 4** zeigt eine Ansicht einer Lochstanze 100 ohne Blechplatte 150.

**Fig. 5** zeigt, wie die in Fig. 4 gezeigte Lochstanze an dem Aufnahmeschlitz 128 einen Abschnitt der Blechplatte 150 umgreift, in welchem Abschnitt nachfolgend ein Loch gestanzt werden soll.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Befestigen einer Platte (150) an einem weichen Untergrund (350) mit einer Deckverputzschicht (370), wobei das Verfahren aufweist:
Bereitstellen eines einstückig vorgefertigten Befestigungselements (200), das aufweist:
einen Dübelkörper (210) mit einem ersten Außengewinde (212) zum Eindrehen in den weichen Untergrund (350);
einen Kopf (290) mit einem Antrieb (288) an einem ersten Ende des Dübelkörpers (210) zum drehenden Antreiben des Befestigungselements (200) mittels eines Drehwerkzeugs; und
eine Vorschubspitze (224) mit einer ersten Härte größer als eine zweite Härte der Deckverputzschicht (370) an einem dem ersten Ende gegenüberliegenden zweiten Ende des Dübelkörpers (210), wobei die Vorschubspitze (224) zum Eindrehen in die Deckverputzschicht (370) ausgebildet ist;
Stanzen von mindestens einem Loch in der Platte (150) mittels einer Lochstanze (100);
Ansetzen des Drehwerkzeugs an den Kopf (290) und drehendes Antreiben des Antriebs (288) zum Einbringen des bereits vor dem Einbringen einstückig vorgefertigten Befestigungselements (200) durch das Loch in der Platte (150) in den weichen Untergrund (350), so dass zunächst die Vorschubspitze (224) in die Deckverputzschicht (370) und nachfolgend der Dübelkörper (210) in den weichen Untergrund (350) eingedreht wird.

2. Verfahren gemäß Anspruch 1, wobei mittels einer Abstandseinstelleinrichtung (102) der Lochstanze (100) zum Stanzen mehrerer Löcher nacheinander jeweils eine Stanzposition definiert wird, an der die jeweiligen Löcher in definiertem Abstand voneinander, insbesondere äquidistant, in der Platte (150) gestanzt werden.

3. Verfahren gemäß einem der Ansprüche 1 bis 2, wobei der Dübelkörper (210) mit einem Aufnahmehohlraum versehen ist;
wobei eine Dichtschraube (220) des Befestigungselements (200) vorgesehen ist und mit einem bis zu einem Anschlag in dem Aufnahmehohlraum eingedrehten Gewindeschaft versehen ist, der an dem ersten Ende den Kopf (290) und an dem gegenüberliegenden zweiten Ende die Vorschubspitze (224) aufweist;
wobei der Dübelkörper (210) und die Dichtschraube (220) als einstückig vormontierte Einheit ausgebildet sind;
wobei die Dichtschraube (220) und der Gewindeschaft während des Einbringens in Untergrund (350) relativ zueinander unbewegt gehalten werden.

4. Verfahren gemäß einem der Ansprüche 1 bis 3, wobei das Loch mit einem Lochdurchmesser gestanzt wird, der einer Summe aus einem Kerndurchmesser (D) des Dübelkörpers (210) und der Hälfte einer radialen Gewindehöhe (H) des ersten Außengewindes (212) des Dübelkörpers (210) entspricht.

## Claims

1. Method for mounting a plate (150) on a soft substrate (350) with a top plaster layer (370), wherein the method comprises:
providing of an one-piece prefabricated attachment element (200) comprising:
a dowel body (210) having an first external thread (212) for screwing into the soft substrate (350);
a head (290) having a drive system (288) on a first end of the dowel body (210) for rotary driving the attachment element (200) by a turning tool; and
a heading tip (224) having a first hardness being greater than a second hardness of the top plaster layer (370) on a second end of the dowel body (210) opposed to the first end of the dowel body,
wherein the heading tip (224) is provided for screwing into the top plaster layer (370);
punching at least one hole in the plate (150) by a hole punch (100);
applying of a turning tool on the head (290) and rotary driving the drive system (288) for bringing in the attachment element (200) being already one-piece prefabricated before the bringing in through the hole in the plate (150) into the soft substrate (350) such that firstly the heading tip (224) is screwed into the top plaster layer (370) and subsequently the dowel body (210) is screwed into the soft substrate (350).

2. Method according to claim 1,
wherein it is defined a respective punching position by a distance adjust device (102) of the punching tool (100) for subsequently punching several holes, at which the respective holes are punched in a defined distance from each other, in particular equidistant, in the plate (150).

3. Method according to one of the claims 1 to 2,
wherein the dowel body (210) is provided with a receptacle cavity;
wherein a gland (220) of the attachment element (200) is set for and is provided with a thread shaft being screwed in the receptacle cavity up to a stop which comprises the head (290) on the first end and the heading tip (224) on the opposed second end;
wherein the dowel body (210) and the gland (220) are provided as an one-piece preassembled unit;
wherein the gland (220) and the thread shaft are hold unmoved relative to each other during the bringing in into the substrate (350).

4. Method according to one of the claims 1 to 3,
wherein the hole is punched with a hole diameter corresponding to the sum of a core diameter (D) of the dowel body (210) and the half of a radial thread height (H) of the first external thread (212) of the dowel body (210).

## Revendications

1. Procédé de fixation d'une plaque (150) au niveau d'un support mou (350) avec une couche d'enduit de recouvrement (370), **caractérisé en ce que** le procédé présente :
la mise à disposition d'un élément de fixation (200) préfabriqué d'un seul tenant, qui présente :
un corps de cheville (210) avec un premier filetage extérieur (212) pour le vissage dans le support mou (350) ;
une tête (290) avec un entraînement (288) au niveau d'une première extrémité du corps de cheville (210) pour l'entraînement rotatif de l'élément de fixation (200) au moyen de l'outil rotatif ; et
une pointe d'avancement (224) avec une première dureté supérieure à une seconde dureté de la couche d'enduit de recouvrement (370) au niveau d'une seconde extrémité du corps de cheville (210) opposée à la première extrémité, dans lequel la pointe d'avancement (224) est réalisée pour le vissage dans la couche d'enduit de recouvrement (370) ;
le poinçonnage d'au moins un trou dans la plaque (150) au moyen d'une poinçonneuse (100) ;
l'application de l'outil rotatif au niveau de la tête (290) et l'entraînement rotatif de l'entraînement (288) pour l'introduction de l'élément de fixation (200) déjà préfabriqué d'un seul tenant avant l'introduction à travers le trou dans la plaque (150) dans le support mou (350), de sorte que la pointe d'avancement (224) est d'abord vissée dans la couche d'enduit de recouvrement (370) et ensuite le corps de cheville (210) est vissé dans le support mou (350).

2. Procédé selon la revendication 1, **caractérisé en ce que** respectivement une position de poinçonnage, au niveau de laquelle les trous respectifs sont poinçonnés à une distance définie les uns des autres, en particulier de manière équidistante, dans la plaque (150), est définie au moyen d'un dispositif de réglage de distance (102) de la poinçonneuse (100) pour le poinçonnage de plusieurs trous les uns après les autres.

3. Procédé selon l'une quelconque des revendications 1 à 2,
**caractérisé en ce que** le corps de cheville (210) est doté d'une cavité de réception ;
dans lequel une vis étanche (220) de l'élément de fixation (200) est prévue et est dotée d'une tige filetée vissée jusqu'à une butée dans la cavité de logement, qui présente au niveau de la première extrémité la tête (290) et au niveau de la seconde extrémité opposée la pointe d'avancement (224) ;
dans lequel le corps de cheville (210) et la vis étanche (220) sont réalisés en tant qu'unité prémontée d'un seul tenant ;
dans lequel la vis étanche (220) et la tige filetée sont maintenues immobiles l'une par rapport à l'autre pendant l'introduction dans le support (350).

4. Procédé selon l'une quelconque des revendications 1 à 3,
**caractérisé en ce que** le trou est poinçonné avec un diamètre de trou qui correspond à une somme d'un diamètre de noyau (D) du corps de cheville (210) et de la moitié d'une hauteur de filetage radiale (H) du premier filetage extérieur (212) du corps de cheville (210).
